(19) **Europäisches Patentamt / European Patent Office / Office européen des brevets**

(11) **EP 1 695 055 B1**

(12) **EUROPÄISCHE PATENTSCHRIFT**

(45) Veröffentlichungstag und Bekanntmachung des Hinweises auf die Patenterteilung:
**20.07.2011  Patentblatt 2011/29**

(51) Int Cl.:
**G01K 15/00** *(2006.01)*  **G05B 23/02** *(2006.01)*
**G01R 31/00** *(2006.01)*

(21) Anmeldenummer: **04804041.4**

(22) Anmeldetag: **17.12.2004**

(86) Internationale Anmeldenummer:
**PCT/EP2004/014440**

(87) Internationale Veröffentlichungsnummer:
**WO 2005/062012 (07.07.2005 Gazette 2005/27)**

(54) **MESSEINRICHTUNG, INSBESONDERE TEMPERATURMESSUMFORMER**

MEASURING DEVICE, IN PARTICULAR A TEMPERATURE MEASURING TRANSDUCER

DISPOSITIF DE MESURE, EN PARTICULIER CONVERTISSEUR DE MESURE DE TEMPERATURE

(84) Benannte Vertragsstaaten:
**DE FR GB**

(30) Priorität: **19.12.2003  DE 10359988**

(43) Veröffentlichungstag der Anmeldung:
**30.08.2006  Patentblatt 2006/35**

(73) Patentinhaber: **SIEMENS AKTIENGESELLSCHAFT**
**80333 München (DE)**

(72) Erfinder:
• **BURMEISTER, Dirk**
  **76767 Hagenbach (DE)**
• **CHEMISKY, Eric**
  **F-67830 Lauterbourg (FR)**

(56) Entgegenhaltungen:
**EP-A- 0 521 234    JP-A- 6 312 395**
**US-A- 5 829 876**

## Beschreibung

Die Erfindung betrifft eine Messeinrichtung, insbesondere einen Temperaturmessumformer, mit einem elektrischen Widerstand, der in Abhängigkeit einer chemischen oder physikalischen Größe seinen Wert verändert, nach dem Oberbegriff des Anspruchs 1.

Ein Temperaturmessumformer mit einer derartigen Messeinrichtung ist beispielsweise aus der US-PS 5 317 520 bekannt. Die Messung einer Temperatur als chemische oder physikalische Größe erfolgt mit einem elektrischen Widerstand, der in Abhängigkeit dieser Größe seinen Wert verändert. Dieser Widerstand wird bei einer Drei- oder Vierleiterschaltung an eine Auswerteeinrichtung angeschlossen. Jede Seite des Widerstands wird mit einer Vierleiterschaltung mit jeweils zwei Leistungen kontaktiert. Zwei der Leitungen werden dazu genutzt, einen Strom durch den elektrischen Messwiderstand zu leiten. Die beiden anderen Leitungen dienen zum Abgriff der an dem Messwiderstand während der Messung abfallenden Spannung. Auf diese Weise wird erreicht, dass der Wert des Messwiderstands gemessen werden kann, ohne dass ein Strom durch die beiden Leitungen fließt, über welche die Spannung abgegriffen wird. Damit wird das Messergebnis nicht durch einen Spannungsabfall an den Messleitungen beeinflusst. In einer ebenfalls beschriebenen Dreileiterschaltung werden drei Leitungen zum Anschluss des elektrischen Messwiderstands an die Auswerteeinrichtung benutzt. Eine Kompensation des Einflusses des Leitungswiderstands auf das Messergebnis kann dabei ebenfalls durchgeführt werden, beispielsweise indem die Spannungsdifferenz zwischen einer Leitung, mit welcher die Spannung am Widerstand abgegriffen wird, und einer stromführenden Rückleitung bestimmt und bei der Berechnung des Messergebnisses in geeigneter Weise berücksichtigt wird. Die Auswerteeinrichtung des bekannten Messumformers kann die Leitungen auf Drahtbruch überprüfen, indem jede der Leitungen zum elektrischen Widerstand einzeln von diesem getrennt wird. Eine Veränderung des Messwerts kann in diesem Testbetrieb erkannt und somit auf einen Drahtbruch geschlossen werden. Durch den bekannten Messumformer ist es somit möglich, einen Bruch einer Messleitung zu erkennen und diesen Fehler an eine Leitzentrale in einer automatisierungstechnischen Anlage zu melden. Der Messumformer wechselt in einen Fehlermodus und gibt keine weiteren Temperatursignale mehr aus. Je nach Sicherheitskonzept der Anlage kann dadurch in nachteiliger Weise ein sofortiger Stillstand der Anlage ausgelöst werden. Nach Melden des Fehlerzustands an das Bedienpersonal kann der Defekt der Leitung durch Wartungspersonal behoben werden.

Da eine Fehlersuche in einer Großanlage durchaus zeitaufwendig sein kann und längere Anlagenstillstände zu vermeiden sind, werden Messumformer, wie es beispielsweise aus dem Abstract JP 2001-208617 A bekannt ist, zur Erhöhung der Verfügbarkeit redundant ausgeführt. Bei einer derart redundanten Ausführung kann bei Defekt eines Messumformers ein anderer weiterhin zur Erfassung einer Prozesstemperatur genutzt werden, ohne dass die Anlage nach dem Defekt außer Betrieb genommen werden muss. Eine redundante Anordnung von Messumformern hat jedoch den Nachteil, dass sie mit einem hohen Aufwand verbunden ist, da neben den tatsächlich zur Automatisierung einer Anlage erforderlichen Messumformern zusätzliche angeordnet werden müssen, welche gegebenenfalls die Funktion eines ausgefallenen Messumformers übernehmen können.

Der Erfindung liegt die Aufgabe zugrunde, eine Messeinrichtung, insbesondere einen Temperaturmessumformer, mit einem elektrischen Widerstand, der in Abhängigkeit einer chemischen oder physikalischen Größe seinen Wert verändert, zu schaffen, die sich durch eine höhere Verfügbarkeit auszeichnet und dabei mit einem allenfalls geringen Mehraufwand gegenüber herkömmlichen Messeinrichtungen verbunden ist.

Zur Lösung dieser Aufgabe weist die neue Messeinrichtung der eingangs genannten Art die im kennzeichnenden Teil des Anspruchs 1 angegebenen Merkmale auf. In den abhängigen Ansprüchen sind vorteilhafte Weiterbildungen der Erfindung beschrieben.

Die Erfindung hat den Vorteil, dass sie es erlaubt, dass bei Auftreten eines Leitungsbruchs in einer von zwei Leitungen, die auf derselben Seite des Widerstands angeschlossen sind, weiterhin der Wert des Widerstands gemessen werden kann. Ein Leitungsbruch einer Leitung, mit welcher der Widerstand mit einer Auswerteeinrichtung verbunden ist, führt somit nicht mehr zwangsläufig zum Ausfall der Messeinrichtung. Insbesondere in einem Messumformer zur Messung einer Prozesstemperatur in einer automatisierungstechnischen Anlage kann die Prozesstemperatur weiterhin mit hinreichend hoher Genauigkeit gemessen werden und die damit automatisierte Anlage in Betrieb bleiben. Die Zahl der Anlagenstillstände wird somit reduziert und damit verbundene hohe Kosten werden eingespart. Da der Messumformer trotz Bruch einer Leitung weiterhin gültige Messwerte liefert, müssen bei einem Defekt die Reparaturarbeiten nicht sofort erledigt sondern können im Rahmen der turnusmäßigen Wartungsarbeiten durchgeführt werden. Der mit einer redundanten Anordnung von Messumformern verbundene hohe Aufwand kann durch die Erfindung in vorteilhafter Weise vermieden werden.

Wenn der Einfluss des Leitungswiderstands der zweiten Leitung auf das Messergebnis kompensiert wird, so hat dies den Vorteil, dass auch nach Auftreten eines Leitungsbruchs Messungen mit hoher Genauigkeit möglich sind. Beispielsweise kann bei Ausfall einer Leitung einer Vierleiterschaltung auf eine Messung mit einer Dreileiterschaltung gewechselt werden, die ebenfalls eine hohe Messgenauigkeit liefert.

Der Zustand der Leitungen, mit denen ein Messwiderstand an einer Auswerteeinrichtung angeschlossen ist, kann in besonders einfacher Weise überprüft werden, wenn die Auswerteeinrichtung eine Steuer- und Recheneinheit und zumindest eine schaltbare Stromquelle aufweist, die derart mit den Leitungen, die auf einer ersten Seite des Messwiderstands angeschlossen sind, verschaltet ist, dass die Stromquelle zur Leitungsprüfung wahlweise auf jeweils eine von den beiden Leitungen zuschaltbar ist. Wenn sich bei Zuschalten der Stromquelle auf eine Leitung kein Stromfluss einstellt, kann darauf geschlossen werden, dass in der jeweiligen Leitung ein Leitungsbruch vorliegt. Auf diese Weise ist eine einfache Prüfung der beiden in einer Vierleiterschaltung normalerweise stromführenden Leitungen möglich.

Zur Prüfung der auf der zweiten Seite des Messwiderstands angeschlossenen Leitungen kann in entsprechender Weise ein steuerbarer Umschalter in der Auswerteeinrichtung vorgesehen werden, welcher durch die Steuer- und Recheneinheit ansteuerbar ist. Dieser Umschalter kann derart mit den beiden Leitungen, die auf der zweiten Seite des Messwiderstands angeschlossen sind, verschaltet werden, dass wahlweise jeweils eine der beiden Leitungen zur Ableitung des durch die Stromquelle in den Messwiderstand eingespeisten Stroms zuschaltbar ist. Wenn in einem Schaltzustand kein Strom durch den Messwiderstand fließt, kann wiederum auf Vorliegen eines Leitungsbruchs geschlossen werden.

Wenn durch die Auswerteeinrichtung bei einem Betrieb der Messeinrichtung mit intakten Leitungen die elektrischen Widerstände der einzelnen Leitungen bestimmt werden, hat dies den Vorteil, dass nach Auftreten eines Leitungsbruchs der Einfluss des Leitungswiderstands auf das Messergebnis rechnerisch durch die Steuer- und Recheneinheit kompensiert werden kann. Damit wird die Messgenauigkeit verbessert.

Anhand der Zeichnung, in der ein Ausführungsbeispiel der Erfindung dargestellt ist, werden im Folgenden die Erfindung sowie Ausgestaltungen und Vorteile näher erläutert.

Die Figur zeigt eine Prinzipdarstellung einer Messeinrichtung mit einem elektrischen Widerstand RS, der in einem Temperaturmessumformer seinen Widerstandswert in Abhängigkeit einer Temperatur verändert. Der Widerstand RS ist mit vier Leitungen L1, L2, L3 und L4 an eine Auswerteeinrichtung A angeschlossen. Hierbei handelt es sich um eine so genannte Vierleiterschaltung, bei welcher zwei Leitungen L1 und L2 an einer ersten Seite S1 des Widerstands RS und zwei Leitungen L3 und L4 an einer zweiten Seite S2 des Widerstands RS angeschlossen sind. Der elektrische Widerstandsbelag, mit welchem die Leitungen L1...L4 behaftet sind, wird durch Aufnahme konzentrierter Widerstände RL1, RL2, RL3 bzw. RL4 in das Schaltbild berücksichtigt. Die Auswerteeinrichtung A enthält eine Steuer- und Recheneinheit SR, die im Wesentlichen durch einen Mikroprozessor mit einem Programmspeicher für ein geeignetes Betriebsprogramm und mit einem Datenspeicher zur Abspeicherung variabler Größen realisiert sein kann. Mit dieser Steuer- und Recheneinheit SR sind zwei steuerbare Stromquellen I1 und I2 einstellbar, die an den Leitungen L1 bzw. L2 angeschlossen sind. Weiterhin können durch die Steuer- und Recheneinheit SR zwei Schalter SW1 und SW2 gesteuert werden, welche die eine Seite eines Referenzwiderstands RR, dessen andere Seite mit Masse M verbunden ist, wahlweise mit der Leitung L3 oder mit der Leitung L4 verbinden können. Die Schalter SW1 und SW2 sind quasi als Umschalter betreibbar. Spannungen U1, U2, U3 und U4, die an den Enden der Leitungen L1, L2, L3 bzw. L4, die an der Auswerteeinrichtung A angeschlossen sind, gegenüber Masse als Bezugspotenzial herrschen, sind auf Analogeingänge der Steuer- und Recheneinheit SR geführt und werden dort zu Digitalwerten für eine weitere Verarbeitung gewandelt. Gleiches gilt für eine Spannung UR, die sich aufgrund eines Stromflusses am Referenzwiderstand RR einstellt.

Im Normalbetrieb fließt der Strom der Quelle I1 über den Widerstand RL1 der Leitung L1, den Leitungswiderstand RL4 der Leitung L4, den Schalter SW1 und den Referenzwiderstand RR durch den Messwiderstand RS. Die Differenz zwischen den beiden Spannungen U2 und U3 sowie die Spannung UR werden gemessen. Für den Widerstand RR gilt die Gleichung:

$$RS = \frac{(U2 - U3)}{UR} \cdot RR .$$

Bei dieser Messung ist also die Stromquelle I1 eingeschaltet, die Stromquelle I2 ausgestaltet, der Schalter SW1 geschlossen und der Schalter SW2 offen.

Während des laufenden Messbetriebs wird ständig überwacht, ob die Leitungen L1 bis L4 einen Leitungsbruch haben. Bei Auftreten eines Leitungsbruchs in einer der Leitungen L1 oder L4 fließt in dieser Betriebsart kein Strom durch den Referenzwiderstand RR und die durch die Steuer- und Recheneinheit SR gemessene Spannung UR beträgt 0V. Dieser wird also sofort erkannt. Für die Überprüfung der Leitungen L2 und L3 wird kurzzeitig die Stromquelle I1 abgeschaltet und die Stromquelle I2 zugeschaltet sowie der Schalter SW1 geöffnet und der Schalter SW2 geschlossen. Ist in diesem Zustand die Spannung UR=0V, so wird ein Bruch der Leitung L2 und/oder L3 erkannt. Je nachdem, welche der Leitungen L1 bis L4 gebrochen ist, wird eine Auswahl einer der beiden Stromquellen, die zugeschaltet werden muss, und eine Auswahl eines der beiden Schalter, der zu schließen ist, getroffen, damit weiterhin eine Messung des Widerstands RS möglich ist.

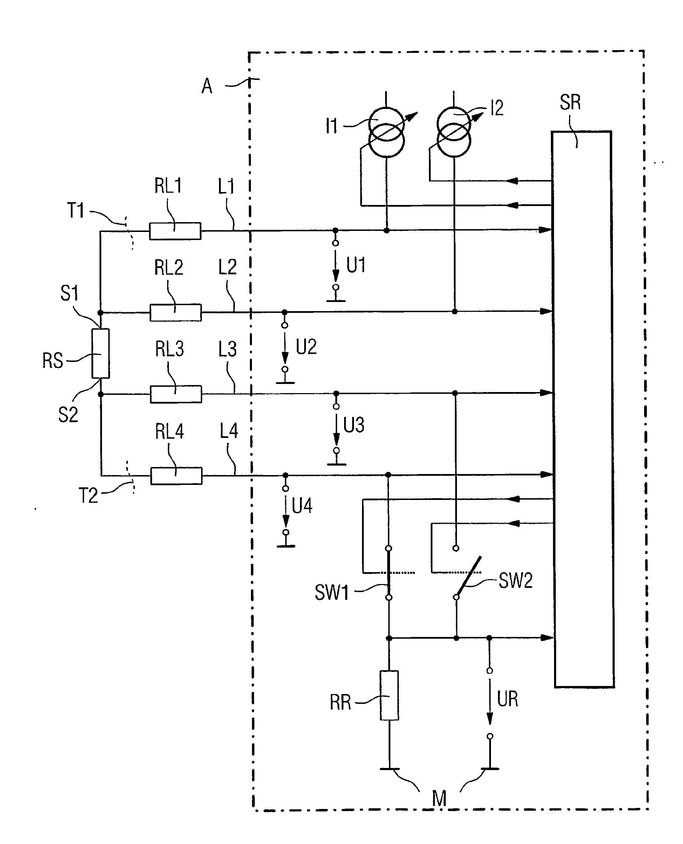

Im Folgenden wird beispielhaft beschrieben, wie ein Bruch der Leitung L1, der in der Figur durch eine gestrichelte Trennlinie T1 markiert ist, erkannt und behandelt werden kann. Während der normalen Messung wird ein Messstrom von der Quelle I1 über die Leitung L1 durch den Widerstand RS über die Leitung L4 und den Schalter SW1 durch den Widerstand RR geführt. Ein Leitungsbruch wird erkannt, sobald die Spannung UR=0V wird. Nun ist zu prüfen, ob die Leitung L1 oder die Leitung L4 defekt ist. Dazu wird die Stromquelle I2 aktiviert und die Stromquelle I1 abgeschaltet. Der Strom fließt nun über die Leitung L2 zur einen Seite S1 des Widerstands RS. Da mit der eingezeichneten Trennung T1 sich nun eine Spannung UR>0 einstellt, kann unmittelbar darauf geschlossen werden, dass die Leitung L1 gebrochen ist. Wäre die Spannung UR weiterhin gleich 0V, so ließe dies auf einen Bruch der Leitung L4 schließen oder darauf, dass beide Leitungen L1 und L4 defekt sind. Je nach erkanntem Fehlerfall wird eine geeignete Betriebsart zur weiteren Messung des Widerstands RS gewählt. Für das in Figur 1 mit einer durchbrochenen Trennlinie T1 dargestellte Beispiel mit lediglich einem Bruch der Leitung L1 können weitere Messungen nach Art einer Dreileiterschaltung durchgeführt werden. Diese zeichnet sich ebenfalls durch eine hohe Messgenauigkeit aus. Der Widerstand RS wird bestimmt nach der Gleichung:

$$RS = \frac{[(U2 - U4) - 2 \cdot (U3 - U4)]}{UR} \cdot RR .$$

Dabei ist die Stromquelle I1 ausgeschaltet, die Stromquelle I2 eingeschaltet, der Schalter SW1 geschlossen und der Schalter SW2 offen.

In entsprechender Weise kann bei einem Bruch der Leitung L4 der Widerstand RS berechnet werden nach der Formel

$$RS = \frac{[(U1 - U3) - 2 \cdot (U1 - U2)]}{UR} \cdot RR .$$

Dabei ist nun die Stromquelle I1 eingeschaltet, die Stromquelle I2 ausgeschaltet, der Schalter SW1 offen und der Schalter SW2 geschlossen.

Auf analoge Weise kann bei einem Bruch der Leitungen L2 oder L3 weiterhin der Wert des Widerstands RS mit einer Dreileiterschaltung bestimmt werden. Dazu ist in den beiden letztgenannten Formeln lediglich die Spannung U2 durch U1 bzw. die Spannung U3 durch U4 zu ersetzen.

Mit der Voraussetzung, dass die Leitungen L1 bis L4 denselben Widerstand RL1, RL2, RL3 bzw. RL4 besitzen, ist das Messergebnis in Dreileiterschaltung identisch zum Messergebnis in Vierleiterschaltung. Es entsteht somit durch den Bruch einer einzigen der vier Leitungen L1 bis L4 kein Genauigkeitsnachteil, wenn von einer Vierleiterschaltung auf eine Dreileiterschaltung gewechselt wird.

Die in der Figur dargestellte Schaltung mit einem Bruch der Leitung L1, der durch die Trennlinie T1 angedeutet ist, entspricht, wie bereits oben erwähnt, einer Dreileiterschaltung. Im Folgenden wird beschrieben, wie im Betrieb dieser Schaltung eine Prüfung auf Bruch einer weiteren Leitung durchgeführt werden kann und eine Messung des Widerstands RS bei einem zusätzlichen Bruch einer der Leitungen L3 oder L4 weiterhin ermöglicht wird. Für die Dreileiterschaltung erfolgt die Messung des Widerstands RS nach der bereits oben genannten Gleichung. Während des laufenden Messbetriebs wird ständig überwacht, ob die Leitungen L2, L3 und/oder L4 einen Leitungsbruch haben. Bei Auftreten eines Leitungsbruchs kann kein Strom mehr durch den Widerstand RR fließen. Die Spannung UR wird somit gleich 0V. Während der normalen Messung werden daher die Leitungen L2 und L4 geprüft. Für eine Überprüfung der Leitung L3 wird kurzzeitig der Schalter SW1 geöffnet und der Schalter SW2 durch die Steuer- und Recheneinheit SR geschlossen. Wird nun die Spannung UR=0V, so wird ein Leitungsbruch erkannt und es wird anschließend geprüft, welche der Leitungen L2, L3 und/oder L4 defekt ist. In Abhängigkeit des Prüfungsergebnisses wird der Strom der Stromquelle I2 über den Schalter SW1 oder SW2 geschaltet und eine geeignete Messart ausgewählt.

Im Folgenden wird angenommen, dass zusätzlich zur Leitung L1 auch die Leitung L4 gebrochen ist, wie es zwei durchbrochene Trennlinien T1 und T2 in der Figur andeuten. Welche der drei Leitungen L2, L3 und L4 einen Leitungsbruch besitzt, kann beispielsweise nach der folgenden Vorgehensweise bestimmt werden. Bei der normalen Messung, bei welcher der Strom I2 über die Leitung L2, den Widerstand RS, die Leitung L4, den Schalter SW1 und den Widerstand RR geführt wird, erkennt die Steuer- und Recheneinheit SR den Leitungsbruch der Leitung L4, da die Spannung UR=0 wird. Es ist nun zu prüfen, ob die Leitung L2 oder die Leitung L4 defekt ist. Dazu wird durch die Steuer- und Recheneinheit SR die Stellung der Schalter SW1 und SW2 dahingehend geändert, dass nun der Schalter SW1 geöffnet und der Schalter SW2 geschlossen ist. Ist in diesem Zustand die Spannung UR=0V, so ist L2 die gebrochene Leitung. Ist dagegen die Spannung UR>0V, so kann direkt geschlossen werden, dass die Leitung L4 defekt sein muss. Für den Fall, dass die Leitung L2 gebrochen wäre, könnten keine weiteren Messungen mehr durchgeführt werden. Im Fall eines Bruchs der Leitung L4, kann die Messung des Widerstands RS weiterhin in einer Zweileiterschaltung erfolgen. Der Widerstand RS wird somit nach der folgenden Gleichung berechnet:

$$RS = \frac{[(U2 - U3)]}{UR} \cdot RR .$$

Dabei ist die Stromquelle I1 ausgeschaltet, die Stromquelle I2 eingeschaltet, der Schalter SW1 offen und der Schalter SW2 geschlossen.

In analoger Weise kann eine Messung des Widerstands RS ebenfalls weiterhin durchgeführt werden, wenn anstelle des Bruchs der Leitung L4 die Leitung L3 gebrochen ist. In diesem Fall ist lediglich in oben genannter Gleichung für den Widerstand RS die Spannung U3 durch die Spannung U4 zu ersetzen.

Ohne weitere Maßnahmen ist das Messergebnis der Widerstandsmessung in einer Zweileiterschaltung nicht identisch zum Messergebnis in einer Drei- oder Vierleiterschaltung. Der Grund dafür ist, dass bei einer Zweileiterschaltung die Leitungswiderstände der Leitungen nicht vernachlässigt werden dürfen. Es würde sich somit bei einem Wechsel der Schaltung von einer Dreileiter- auf eine Zweileiterschaltung die Messgenauigkeit verringern. In vorteilhafter Weise wird dies dadurch vermieden, dass durch die Steuer- und Recheneinheit SR zu einem Zeitpunkt, in welchem die Verdrahtung noch in Ordnung ist, der jeweilige Wert der Widerstände RL1, RL2, RL3 und/oder RL4 bestimmt wird. Liegen die einzelnen Widerstandswerte vor, so kann bei Leitungsbruch und Wechsel in eine Zweileiterschaltung das Messergebnis anhand der nun bekannten Widerstandswerte korrigiert werden. Das Messergebnis hat dann annähernd die gleiche Genauigkeit wie in einer Drei- oder Vierleiterschaltung. Eine Restungenauigkeit im Messergebnis bleibt jedoch aufgrund der Temperaturabhängigkeit der Leitungswiderstände, die durch andere Maßnahmen korrigiert werden müsste. Die Messung und Berechnung der einzelnen Leitungswiderständen RL1...RL4 kann bei der in der Zeichnung dargestellten fehlerfreien Vierleiterschaltung beispielsweise nach den folgenden Gleichungen durchgeführt werden:

$$RL1 = \frac{(U1 - U2)}{UR} \cdot RR$$

mit I2=aus, I1=ein; SW1 ist geschlossen, SW2 ist offen,

$$RL2 = \frac{(U2 - U1)}{UR} \cdot RR$$

mit I2=ein, I1=aus; SW1 ist offen, SW2 ist geschlossen,

$$RL3 = \frac{(U4 - U3)}{UR} \cdot RR$$

mit I2=ein, I1=aus; SW1 ist offen, SW2 ist geschlossen und

$$RL4 = \frac{(U3 - U4)}{UR} \cdot RR$$

mit I2=aus, I1=ein; SW1 ist geschlossen, SW2 ist offen.

Liegt ein Leitungsbruch vor, so ist die Auswerteelektronik A somit in der Lage, eine andere geeignete Schaltungsart, je nach Bedarf eine Dreileiter- oder Zweileiterschaltung, auszuwählen und den Messbetrieb ohne großen Genauigkeitsverlust weiterzuführen. Bei einer Verwendung der Messeinrichtung in einem intelligenten Messumformer mit beispielsweise einer PROFIBUS- oder HART-Schnittstelle kann der erkannte Leitungsbruch als Statusinformation an eine Leitzentrale übertragen und evtl. eine Reparatur der gebrochenen Leitung eingeleitet werden.

Alternativ zum beschriebenen Ausführungsbeispiel, bei welchem eine Stromquelle zur Einspeisung eines Messstroms in den Messwiderstand verwendet wird, ist es selbstverständlich auch möglich, eine Spannungsquelle einzusetzen und zur Bestimmung des Werts des Messwiderstands den sich dabei einstellenden Stromwert zu erfassen.

**Patentansprüche**

1. Messeinrichtung, insbesondere Temperaturmessumformer, mit einem elektrischen Widerstand (RS), der in Abhängigkeit einer chemischen oder physikalischen Größe seinen Wert verändert und der mit zumindest drei Leitungen (L1...L4) an einer Auswerteeinrichtung (A) angeschlossen ist, durch welche die Leitungen (L1...L4) auf einen Leitungsbruch prüfbar sind, **dadurch gekennzeichnet, dass** die Auswerteeinrichtung (A) derart ausgebildet ist, dass bei Leitungsbruch einer ersten (L1) von zwei Leitungen (L1, L2), die auf derselben Seite (S1) des Widerstands (RS) angeschlossen sind, weiterhin eine Messung des Widerstandswerts ohne Verwendung der ersten, defekten Leitung (L1) mit der jeweils anderen, zweiten Leitung (L2) durchführbar ist, indem sowohl der durch den Widerstand (RS) geleitete Strom über die zweite Leitung (L2) geführt als auch die dabei abfallende Spannung mit der zweiten Leitung (L2) abgegriffen wird.

2. Messeinrichtung nach Anspruch 1, **dadurch gekennzeichnet, dass** die Auswerteeinrichtung (A) weiterhin derart ausgestaltet ist, dass der Einfluss des Leitungswiderstands (RL2) der zweiten Leitung (L2) auf das Messergebnis kompensierbar ist.

3. Messeinrichtung nach Anspruch 1 oder 2, **dadurch gekennzeichnet, dass** die Auswerteeinrichtung (A) eine Steuer- und Recheneinheit (SR) und zumindest eine schaltbare Stromquelle (I1, I2) aufweist derart, dass die Stromquelle (I1, I2) zur Leitungsprüfung wahlweise auf jeweils eine von zwei Leitungen (L1, L2), die auf einer ersten Seite (S1) des Messwiderstands (RS) angeschlossen sind, zuschaltbar ist und dass der jeweilige, durch den Messwiderstand (RS) fließende Strom erfassbar und zur Feststellung eines Leitungsbruchs auswertbar ist.

4. Messeinrichtung nach Anspruch 3, **dadurch gekennzeichnet, dass** die Auswerteeinrichtung (A) weiterhin einen steuerbaren Umschalter (SW1, SW2) aufweist derart, dass zur Leitungsprüfung wahlweise eine von zwei Leitungen (L3, L4), die auf der zweiten Seite (S2) des Messwiderstands (RS) angeschlossen sind, zur Ableitung des durch die Stromquelle (I1, I2) in den Messwiderstand (RS) eingespeisten Stroms zuschaltbar ist und dass der jeweilige, durch den Messwiderstand (RS) fließende Strom erfassbar und zur Feststellung eines Leitungsbruchs auswertbar ist.

5. Messeinrichtung nach einem der vorhergehenden Ansprüche, **dadurch gekennzeichnet, dass** die Auswerteeinrichtung (A) derart ausgebildet ist, dass die Leitungswiderstände (RL1...RL4) bei intakten Leitungen (L1...L4) bestimmbar sind.

6. Messeinrichtung nach einem der vorhergehenden Ansprüche, **dadurch gekennzeichnet, dass** sie Bestandteil eines Messumformers zur Temperaturmessung und für eine Anwendung in einer automatisierungstechnischen Anlage geeignet ist.

**Claims**

1. Measuring device, especially temperature measuring transducer, with an electrical resistor (RS), which varies its value depending on a chemical or physical variable, and which is connected by at least three lines (L1...L4) to an evaluation device (A), through which the lines (L1...L4) can be checked for a line break, **characterised in that** the evaluation device (A) is embodied such that, for a break in a first line (L1) of two lines (L1, L2) which are connected on the same side (S1) of the resistor (RS), a measurement of the resistance value can continue to be conducted without using the first defective line (L1) with the other, second line (L2) in each case, by both routing the current conducted through the resistor (RS) via the second line (L2) and also by tapping off the falling voltage with the second line (L2).

2. Measuring device according to claim 1, **characterised in that** the evaluation device (A) is further designed so that the influence of the line resistance (RL2) of the second line (L2) on the measuring result can be compensated for.

3. Measuring device according to claim 1 or 2, **characterised in that** the evaluation device (A) features a control and processing unit (SR) and at least one switchable current source (I1, I2) such that the current source (I1, I2) for line checking is optionally switchable to one of two lines (L1, L2) respectively, which are connected to a first side (S1) of the measuring resistor (RS), and that the relevant current flowing through the measuring resistor (RS) can be recorded and evaluated to establish a line break.

4. Measuring device according to claim 3, **characterized in that** the evaluation device (A) furthermore features a controllable switchover unit (SW1, SW2) such that, to check the lines, one of two lines (L3, L4), which are connected to the second side (S2) of the measuring resistor (RS) can be switched in to conduct away a current fed through the current source (I1, I2) into the measuring resistor (RS) and that the relevant current flowing through the measuring resistor (RS) can be recorded and is able to be evaluated to identify a line break.

5. Measuring device according to one of the preceding claims, **characterised in that** the evaluation device (A) is embodied such that the line resistances (RL1...RL4) can be determined for intact lines (L1...L4).

6. Measuring device according to one of the preceding claims, **characterised in that** it is a component of a measuring transducer for temperature measurement and is suitable for use in an automation technology system.

**Revendications**

1. Dispositif de mesure, notamment convertisseur de température, ayant une résistance ( RS ) électrique, dont la valeur se modifie en fonction d'une grandeur chimique ou physique et qui est reliée par au moins trois lignes ( L1...L4 ) à un dispositif ( A ) d'exploitation, par lequel une rupture des lignes ( L1....L4 ) peut être contrôlée, **caractérisé en ce que** le dispositif ( A ) d'exploitation est tel que, s'il se produit une rupture d'une première ( L1 ) de deux lignes ( L1, L2 ) qui sont reliées au même côté ( S1 ) de la résistance (RS), une mesure de la valeur de la résistance, sans utilisation de la première ligne ( L1 ) défectueuse, continue à être possible respectivement avec l'autre deuxième ligne ( L2 ), par le fait que tant le courant passant par la résistance ( RS ) qui passe dans la deuxième ligne ( L2 ) qu'également la tension qui y chute sont mesurés par la deuxième ligne ( L2 ).

2. Dispositif suivant la revendication 1, **caractérisé en ce que** le dispositif ( A ) d'exploitation est en outre tel que l'influence de la résistance ( RL2 ) de la deuxième ligne ( L2 ) sur le résultat de la mesure peut être compensé.

3. Dispositif suivant la revendication 1 ou 2, **caractérisé en ce que** le dispositif ( A ) d'exploitation comporte une unité ( SR ) de commande et de calcul et au moins une source ( I1, I2 ) de courant commutable de manière à ce que la source ( I1, I2 ) de courant puisse, pour le contrôle de la ligne être montée au choix sur respectivement l'une des deux lignes ( L1, L2 ), qui sont reliées à un premier côté ( S1 ) de la résistance ( RS ) de mesure et **en ce que** le courant respectif passant dans la résistance ( RS ) de mesure peut être détecté et être exploité pour la constatation d'une rupture de ligne.

4. Dispositif suivant la revendication 3, **caractérisé en ce que** le dispositif ( A ) d'exploitation a en outre un inverseur ( SW1, SW2 ) pouvant être commandé, **en ce que**, pour le contrôle de ligne au choix l'une des deux lignes ( L3, L4 ), qui sont reliées au deuxième côté ( S2 ) de la résistance ( RS ) de mesure, peut être branchée pour déduire le courant injecté par la source ( I1, I2 ) de courant dans la résistance ( RS ) de mesure et **en ce que** le courant passant dans la résistance ( RS ) de mesure peut être détecté et être exploité pour la constatation d'une rupture de ligne.

5. Dispositif suivant l'une des revendications précédentes, **caractérisé en ce que** le dispositif ( A ) d'exploitation est tel que les résistances ( RL1...RL4 ) de ligne peuvent être déterminées lorsque les lignes ( L1...L4 ) sont intactes.

6. Dispositif suivant l'une des revendications précédentes, **caractérisé en ce qu'**il fait partie d'un convertisseur de mesure pour la mesure de température et **en ce qu'**il est approprié à une application dans un système de la technique d'automatisation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US PS5317520 A
- JP 2001208617 A